# EUROPEAN PATENT APPLICATION

(11) **EP 4 727 115 A1**
(43) Date of publication of application: **15.04.2026**
(21) Application number: 24205261.1
(22) Date of filing: 08.10.2024
(51) Int. Cl.: H04N 13/239

(54) **IMAGING SYSTEM COMPRISING A STEREOSCOPIC IMAGING DEVICE AND METHOD FOR ADAPTING A FOCUS POINT OF A STEREOSCOPIC IMAGING DEVICE**

(71) Applicant: BHS Technologies GmbH, 6020 Innsbruck (AT)
(72) Inventor: BURGER, Gregor, 6176 Völs (AT); CAPEK, Carol, 6020 Innsbruck (AT); LEDERER, Lukas, 6020 Innsbruck (AT); PESCOLLER, Katharina, 6075 Tulfes (AT); MAIR, Michael, 6063 Rum (AT)
(74) Representative: Prüfer & Partner mbB Patentanwälte · Rechtsanwälte

(57) **Abstract**

The present invention relates to an imaging system (100), comprising:
a stereoscopic imaging device (10) configured to image a left image (1L) with respect to an image representation for a left eye, and a right image (1R) with respect to an image representation for a right eye,
wherein each of the left image (1L) and the right image corresponds to a respective optical axis (11 a) of the stereoscopic imaging device (10), and
wherein the optical axes (11a) intersect with each other to define a focus point (11b) in a focus plane (11c),

a control device (30) configured to adapt the focus point (11b),
a display device (50) operatively connected to the stereoscopic imaging device (10) to display the left image (1L) and the right image (1R), and
a processing unit (40) operatively connected to the stereoscopic imaging device (10) and configured to transfer each of at least a portion of the left image (1L) and at least a portion of the right image (1R) into a pixel pattern, and to compare the pixel patterns with respect to positions representing the respective imaging coordinates.

## Description

The present invention relates to an imaging system comprising a stereoscopic imaging device and method for adapting a focus point of a stereoscopic imaging device. The present invention further relates to a respective computer program product and a respective computer-readable storage medium allowing execution of the method.

For stereoscopic imaging, for example, by use of a robotic microscope system for medical procedures it is important to receive a sharp image of an object to be observed. In principle, sharp image of an object by an optical system is provided when the object to be observed is located in the depth of focus of the optical system. Fulfilment of such requirement is not trivial with respect to stereoscopic imaging devices as the previously mentioned robotic microscope, since both of the optical axis for stereo imaging have to intersect each other at the object to be observed as the desired focus point of the stereoscopic imaging device. Due to a high depth of focus of optical systems, the focus point of the stereoscopic devices may not be unambiguously defined in any event. In other words, the more the depth of focus and the less the angle between the optical axes of the stereoscopic device, the more difficult the setting of an optimal focus point by an operator.

Further, with respect to moving the stereoscopic imaging device with a constant distance around preset focus point as an orbital movement of the stereoscopic imaging service with the preset focus point as tool center point, any deviation of the preset focus point with respect to an optimal focus point becomes more severe. For example, if the preset focus point does not accurately match with the object to be observed, an orbital movement around the misaligned preset focus point causes the object to be observed to show an off-center movement with respect to the displayed image center. Such movement is inconvenient for an operator and may result into further burden when working with the stereoscopic imaging device.

Accordingly, for optimal setting of the focus point of stereoscopic imaging devices, it is known to radiate two laser beams of different colour each of which representing an optical axis of the stereoscopic imaging device. The focus point is then determined as optimal when the two laser beams form one point on the object to be observed. By use of different colours the direction for any adaption to achieve to optimal focus point may be easily recognized.

However, the above configuration requires additional hardware and results in respective costs and required installation space. Furthermore, the accurate alignment of the laser beam with respect to the respective optical axis is challenging.

An alternative configuration takes advantage of contrast measurements but a respective adaption of a focus point is time consuming.

It is an object of the present invention to provide an imaging system comprising a stereoscopic imaging device and a method for an improved determination of deviations of a preset focus point from an optimal focus point for allowing a focus point to be adapted accordingly.

The object is solved by the subject-matter of the independent claims. Further aspects of the present invention are subject to the dependent claims.

According to the present invention, an imaging system comprises a stereoscopic imaging device configured to image a left image with respect to an image representation for a left eye, and a right image with respect to an image representation for a right eye. Each of the left image and the right image corresponds to a respective optical axis of the stereoscopic imaging device, and the optical axes intersect with each other to define a focus point in a focus plane. The imaging system further comprises a control device configured to adapt the focus point, a display device operatively connected to the stereoscopic imaging device to display the left image and the right image, and a processing unit operatively connected to the stereoscopic imaging device. The processing unit is configured to transfer each of at least a portion of the left image and at least a portion of the right image into a pixel pattern, and to compare the pixel patterns with respect to positions representing the respective imaging coordinates.

For example, the imaging system may be a robotic microscope system, particularly for medical procedures, comprising a stereoscopic microscope as stereoscopic imaging device. The stereoscopic imaging device may comprise two objectives, one being associated with the left image as a left objective and the other being associated with the right image as a right objective. The optical axis of the left objective and the optical axis of the right objective are aligned to intersect each other at a focus point.

The adaption of the focus point with respect to an object to be observed by the control device may be accomplished by a respective control of the robotic system to move the stereoscopic imaging device and thereby the focus point. Alternatively or in addition, the focus point may be adapted by the control device by controlling a movement of at least one of the objectives as focussing optics along the corresponding optical axis. Instead of at least one objective for each of the left and right image, at least one common objective as focussing optic may be provided for both of the left and right image.

Each of the left and right objective is associated with a respective imaging sensor, such as a CCD chip. Alternatively, each of the left and right objective is associated with a predetermined portion of one imaging sensor. The imaging sensors or the respective portions of an imaging sensor are configured to image a left image and a right image of the object to be observed.

The left image and the right image are displayed by a display device such as a monitor, specifically a 3D monitor, or a head-mounted display, which may also be configured for 3D image representation. A respective head mounted display may comprise two display portions, i.e. a left eye display portion to display the left image to the left eye of an operator, and a right eye display portion to display the right image to the right eye of the operator. With respect to the display device operatively connected to the stereoscopic imaging device, the term "operatively connected" refers to any kind of direct and indirect connection as well as a direct or indirect connection by a physical signal supply line or by wireless signal transmission. Such definition also applies in general for the term "operatively connected" as long as not defined otherwise.

The processing device is operatively connected to the stereoscopic imaging device to receive the left image and the right image in-between the signal transmission from the stereoscopic imaging device to the display device or separately. In the event of the processing unit being arranged in the signal transmission path between the stereoscopic imaging device and the display device, the processing unit may be further configured to process images to be displayed, e.g. with respect to contrast, brightness, magnification or the like. Alternatively or in addition, the images may be processed to execute and/or improve the comparison of pixel patterns, for example, as per the methods described further below.

For determination of a focus point not sufficiently aligned with the object to be observed, the processing unit is configured to transfer at least a portion of each of the left image and the right image into a pixel pattern to be compared according to positions representing respective imaging coordinates. For example, the left image as a whole as imaged by the respective imaging sensor is a pixel map with concrete imaging coordinates. The same applies for the right image. The processing unit transfers such pixel maps or portions thereof as a pixel pattern with each pixel being defined by the coordinates of with respect to the pixel map. With respect to a comparison of the pixel patterns, the imaging coordinates of the left image and the imaging coordinates of the right image are aligned with each other. Specifically, the pixel pattern comprises more than one pixel to not only allow to determine a deviation in a translational but also rotational direction.

The comparison of the pixel patterns by the processing device may comprise a direct comparison by the processing unit to determine a deviation of the focus point with respect to the object to be observed or an indirect comparison by the processing unit in terms of compiling pixel data. A deviation of the focus point is represented by a mismatch of the compared or compiled data with a predetermined pixel match according to the imaging coordinates.

The comparison of the pixel patterns may be provided by executing a respective algorithm and/or by a representation to be displayed to a user for a respective manual control for adapting the focus point. In principle, the processing unit is configured to process the image data for a comparator such as the addressed algorithm or the user to decide whether and preferably in which direction the focus has to be adapted. The algorithm may be part of the processing unit.

In some embodiments, the processing unit is comprised by or operatively connected to the control device.

By the processing unit being comprised by or operatively connected to the control device, the processing unit may transmit a signal representing a determined deviation between the focus point and the object to be observed to the control device to adapt the focus point accordingly.

In some embodiments, the processing unit is operatively connected to a display device and configured to transmit an information signal on the comparison of pixel patterns to be displayed by the display device.

The information signal and a respective information displayed on the display device may only indicate the presence of a deviation but may also indicate the amount of deviation, a direction of movement of the stereoscopic imaging device and/or at least one of the objectives to compensate for the deviation, and/or other information. Since an automatic adjustment may irritate an operator, displaying the information instead of an automatic control may allow the operator to decide on the adaption of the focus. Specifically with respect to displaying the direction of a respective adaption, the operator is supported to ease adaption of the focus point. The operator may control the adaption by a respective input device and/or by a gesture control to provide the control device with respective commands to adapt the focus point.

In some embodiments, the pixel pattern represents a feature or a template of an object imaged by the stereoscopic imaging device.

Accordingly, the left image and the right image are not compared as a whole. Specifically, the feature or template selected may represent a distinctive pixel pattern for the avoidance of misinterpretation in the event of repeating patterns.

The feature or template may for example be a predetermined feature or template of the left image represented by a respective pixel pattern associated with imaging coordinates of the left image. The processing unit may be configured to search for the pixel pattern according to the predetermined feature or template in the right image. After identification of the pixel pattern in the right image, the processing unit compares the image coordinates of the pixel pattern in the left image with the imaging coordinates of the pixel pattern identified in the right image to determine a respective deviation. Preferably, multiple templates and/or features, which may also be different in size, may be used for a respective comparison. The multiple templates and/or features may be distributed around the image center. By multiple templates and/or features, particularly distributed around the image center, the risk of misinterpretations is further reduced. However, since even multiple templates and/or features provide less data to be analysed that a whole image, required calculation resources are reduced.

Further, the comparison is preferably executed with respect to one scan-out line to identify a horizontal offset, i.e. an offset in a direction of the scan-out per line.

The processing unit may further be configured to automatically select or adjust pixel patterns by identifying pixel patterns of unique representation sufficient to determine deviations. Alternatively or in addition, an operator may select a feature or template to be represented by the pixel patterns as a region of interest for adapting a focus point.

In the above context, a feature contains individual characteristics, while the template provides a more general approach of more abstract pixel patterns.

In some embodiments, the processing unit is configured to superimpose the pixel pattern of the left image and the right image with respect to the positions representing the respective imaging coordinates.

Accordingly, superimposing the pixel patterns may be done virtually by assigning sets of pixels of the left image and the right image corresponding to the same imaging coordinates to said imaging coordinates. Superimposing pixel patterns may easy and/or accelerate identification of deviations in the imaging coordinates pixel patterns, for example since the pixel patterns to be searched for comparison are mainly not far away from each other.

In some embodiments, the processing device is configured to detect an offset of the pixel pattern of the left image with respect to the pixel pattern of the right image in at least one direction by comparing the imaging coordinates of the superimposed pixel patterns.

For example, the imaging coordinates may represent a cartesian coordinate system. The processing unit may therefore be configured to assign the imaging coordinates for each pixel as a coordinate in a x-direction, a y-direction and/or a z-direction. Accordingly, upon superimposing the pixel patterns, a deviation of a pixel, for example, in the y-direction in the right image may be identified by the respective pixel in the left image being offset by a respective distance in the y-direction.

In some embodiments, the processing unit is configured to generate a composite image comprising at least one image segment of the left image and one image segment of the right image.

Specifically, the composite image is a representation of the object to be observed by segments of the left image according to left image coordinates and segments of the right image according to right image coordinates. In the event of an optimal focus point, the composite image should provide a perfect representation of the object to be observed. However, in the event of a misaligned focus point, the composite image shows imperfections such as broken lines and the like. Such imperfection may be identified by the processing unit or another image processing unit by comparing the composite image with one of the left or the right image, or by comparing the composite image with a stored image of the object to be observed.

In some embodiments, the composite image is composed of alternating line image segments of the left image and line image segment of the right image.

Alternating line image segments may correspond to a predetermined number of the total number of scan-out lines for the composite image. For example, the total number of scan-out lines may be 1200 and each of the line segments comprises 100 subsequent scan-out lines. Accordingly, the composite image may start with a first line image segment of the left image representing the scan-out lines 1 to 100 of the left image, followed by a second line image segment of the right image representing the scan-out lines 101 to 200 of the right image, followed by a third line image segment of the left image representing the scan-out lines 201 to 300 of the left image, and so on. However, the scan-out lines of the left image and the right image may also alternate from one scan-out line to another, i.e. scan-out line 1 of the left image followed by one scan-out line 2 of the right image followed by can-out line 3 of the left image and so on. Alternating scan-out lines of the left image and right image may also be restricted to scan-out lines associated with templates and/or features to be compared.

The processing unit may be configured to detect a deviation from the focus point with respect to the object to be observed by a deviation of a pixel pattern from the last line of a previous line image segment to the first line of the subsequent line image segment. As a simple example, a red dot on black ground is the object to be observed. Accordingly, a pixel pattern to be observed may be a black pixel followed by a red pixel. Even though the position of the pixel pattern in one line deviates to the position in the subsequent line, such deviation is based on the radius of the red dot and corresponds to the radius and resolution by the scan-out lines. However, any deviation more than the one defined by the geometry and resolution is detectable as a misalignment of the left image and right image.

In some embodiments, the processing unit is operatively connected to a display device and the display device is configured to display the composite image.

As previously said, an automatic adaption of the focus point may not be desired in any event. Accordingly, displaying the composite image by the display device allows an operator to decide autonomously on adapting the focus. The composite image allows the operator to easily recognize a deviation of left image and right image by interruption of a contour of the object to be observed or by other image artefacts such as distortions. For example, with respect to a head-mounted display, the composite image is displayed in the left display portion and in the right display portion.

Further the composite image allows the operator to directly observe the effect of the adaption of the focus point based on the change in the composite image. In principle, irrespective of an automatic adaption or an adaption caused by the operator, the optimal focus point, is achieved, if the composite image presents the object to be observed without the previous deviations.

Further, with respect to the composite image provided by such interlacing method, the operator may decide on the particular focussing position within the composite image. For example, the operator may control the focussing to minimize the differences in the composite image in the left upper corner of the composite image.

In some embodiments, the processing unit is configured to assign different colour schemes to the left image and the right image.

Accordingly, the different colours may allow an operator to easily distinguish between the different image segments originating from the left image or from the right image. Further, the different colour schemes ease recognition deviations.

In some embodiments, the processing unit is configured to assign a predetermined transparency to at least one of the left image and the right image.

For example, the composite image may be displayed as the left image without an transparency superimposed by the right image with a degree of transparency sufficient to also observe the left image underneath. Accordingly, deviations in the representation of the object to be observed by the left image and the right image can be easily identified by an operator. Similar to the composite image of line segments, any effect of an adaption of the focus point may thereby be also controlled visually.

With respect to the composite image displayed, the composite image may also include an information based on the previously described information signal generated and transmitted by the processing unit. For example, the information signal causes the display device or a respective display portion to display an arrow pointing in a direction to adapt the focus point to the optimal focus point.

In a further aspect, the present invention relates to a method for adapting a focus point of a stereoscopic imaging device with respect to an object to be imaged. The method comprises the steps of:
imaging an object by the stereoscopic imaging device to receive a left image with respect to an image representation for a left eye, and a right image with respect to an image representation for a right eye,
transferring each of at least a portion of the left image and at least a portion of the right image into a pixel pattern,
comparing the pixel patterns with respect to positions representing the respective imaging coordinates,
detecting an offset of the pixel pattern of the left image with respect to the pixel pattern of the right image in at least one direction, and
adapting the focus point of the stereoscopic device in accordance with the offset.

The method complies to the previously described functionalities of the imaging system. Specifically, the offset of the pixel pattern representing a deviation of the focus point from an optimal focus point with respect to an object to be observed forms basis for adapting the focus point. Such adaption may be carried out automatically based on providing the control unit of the imaging system with the deviation or respective command to adapt the focus point. Alternatively or in addition, the adaption of the focus point may be initiated by an operator as previously described. An operator may also select a mode of the imaging system for automatic or manual adaption of the focus point. In another mode, an automatic adaption may require the operator to confirm the execution of the automatic adaption.

Further, to improve the comparison between pixel patterns, an image processing may be applied in advance, e.g. after transferring the pixel patterns and before the respective comparison. Suich image processing may include but is not limited to a rectification, contrast adaption, transfer into black-and-white images or image portions, blurring, or the like.

In some embodiments, the step of comparing the pixel patterns comprising at least one of:
searching for the pixel pattern as a feature or template of one of the images in the other image for comparing the imaging coordinates,
calculating a disparity,
generating a depth reconstruction for at least one pixel of the pixel patterns, and
generating a composite image comprising at least one image segment of the left image and image segment of the right image.

With respect to the searching of pixel patterns, a respective stereo offset may be determined by matching features in the left image and the right image by considering the offset, a displacement required for the feature matching. For example, a feature in the left image is searched in the right image and a coordinate transformation to match the position of the feature in the right image with the feature in the left image provides the offset. Similarly, templates can be matched for determination of a respective offset. A disparity calculation may provide another approach to determine a stereo offset. The stereo offset may be further used to calculate the distance from the optimal focus point to provide input data for adapting the focus point.

Similarly, the left image and right image may be processed by the processing unit to generate a depth reconstruction. A depth in one point may also indicate the distance to an optimal focus point.

With respect to the stereo offset or the depth reconstruction an information may be displayed to inform an operator of the direction and/or position to adaption the focus point.

Further, generating the composite image, specifically with respect to line image segments and/or transparency, allows the operator to select a particular point to focus on by adapting the focus to match the left image and right image representations at least in the selected point.

The focus may be adapted by an algorithm determining the image center as the position to focus on. However, in other embodiments, the method and a respective control device may, alternatively or in addition, be configured to select a position to focus on differently from the image center. A selection of a focus position different from the image center may be implemented by a respective input device, gesture recognition or eye tracking. For example, with respect to eye tracking, the focus may be adapted to comply with the position a gaze of the operator is directed to, i.e. the position within the image the operator is looking at.

Any features or functionalities relating to the imaging system with respect to the method are also applicable to the method. In turn, any features or functionalities relating to the method described with respect to the imaging system are also applicable to the imaging system.

In a further aspect, the present invention relates to a computer program product comprising instructions which, when the program is executed by a computer, cause the computer to carry out the method as previously described.

The computer may be a control device comprised by or connected to the imaging system. Accordingly, the control device may be the control device of the imaging system.

In a further aspect, the present invention relates to a computer-readable storage medium comprising instructions which, when executed by a computer, cause the computer to carry out the method as previously described.

Further advantages, aspects and details of the invention are subject to the claims, the following description of exemplary embodiments applying the principles of the invention, and the respective exemplary drawings.
Fig. 1- is a schematic representation of an imaging system according to an exemplary embodiment of the present invention;
Fig. 2 is a schematic representation of an exemplary stereoscopic imaging device of the imaging system according to Fig. 1;
Fig. 3 is a schematic representation of a left image and a right image the present invention is applied to according to a first exemplary embodiment;
Fig. 4 is a schematic representation of a left image and a right image the present invention is applied to according to a second exemplary embodiment;
Fig. 5 is a schematic representation of the left image and the right image according to Fig. 4 being processed according to the second embodiment; and
Fig. 6 is a schematic representation of a composite image based on the processed left image and right image according to Fig. 5 according to the second embodiment.

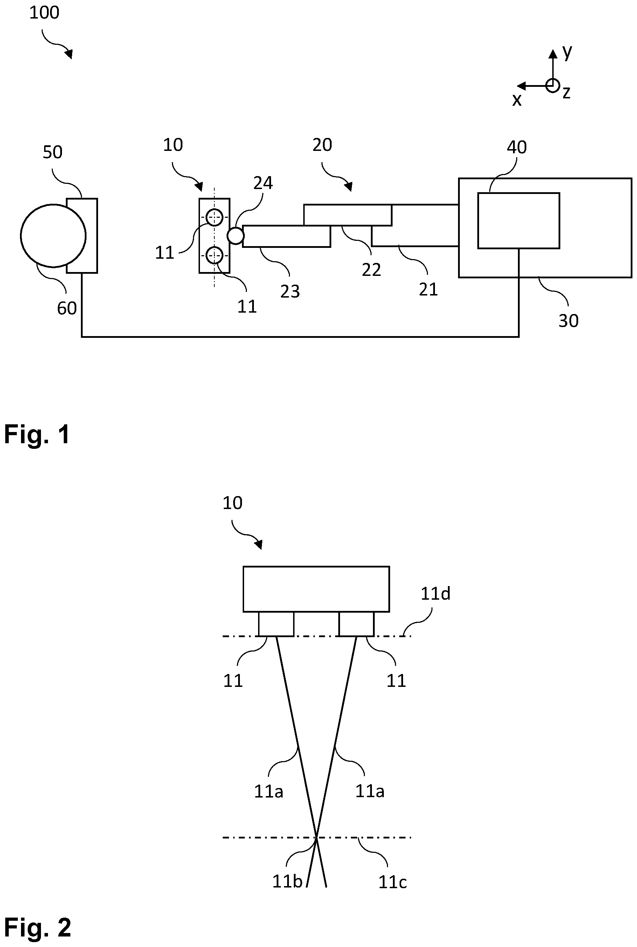

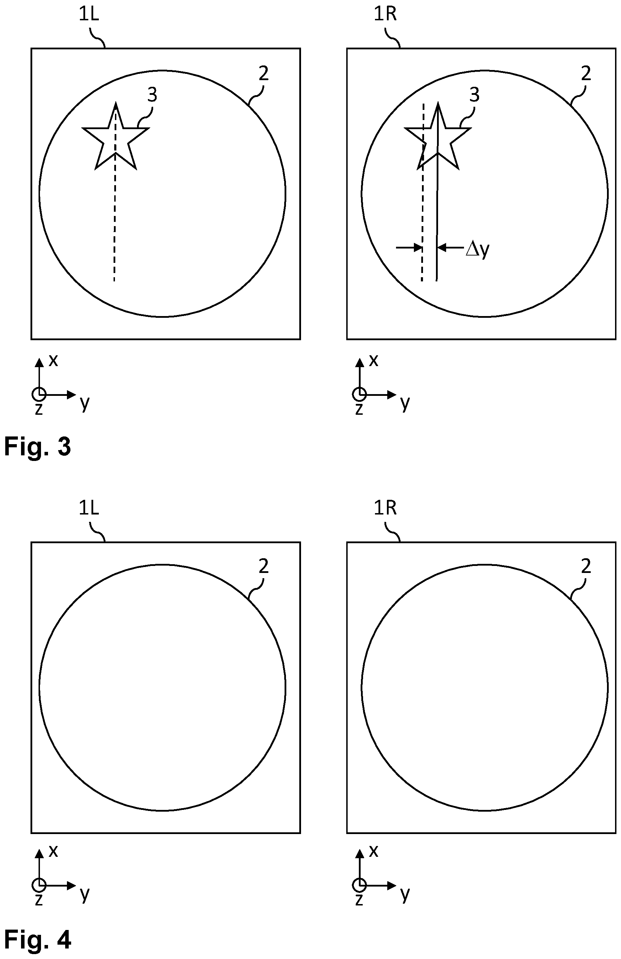

Fig. 1 shows a schematic representation of an imaging system 100 according to an exemplary embodiment of the present invention. The imaging system 100 is a robotic microscope system comprising a stereoscopic imaging device 10 with two objectives 11, a robotic device 20 to move and/or orient the imaging system 10, a control device 30 and a processing unit 40. In the exemplary embodiment, the control device 30 is comprised by the robotic device. However, in alternative embodiments, the control device 30 may be incorporated into the stereoscopic imaging device 10 or may be a separate device. The control device 30 is configured to control a movement and/or orienting of the stereoscopic image device 10 via the robotic device 20. Specifically, the control device 30 is configured to control a first robotic arm 22 extending from a robotic base 21 in an articulation connection thereto, a second robotic arm 23 in articulated connection with the first robotic arm and an articulated joint 24, by which the stereoscopic imaging device 10 is connected to the robotic device 20, to move and/or orient the stereoscopic imaging device 10. The movement and/or orientation of the stereoscopic imaging device 10 is controlled to allow imaging of an object 2 (Fig. 3) to be observed. The processing unit 40 is configured to process images received by the stereoscopic imaging device 10 and to transmit the processed images to a head-mounted display as display device 50 worn by an operator 60. Further, Fig. 1 shows a cartesian coordinate system with a x-direction and y- direction extending within a horizontal plane and a z-direction being oriented in the direction of gravity.

Fig. 2 shows a schematic representation of the exemplary stereoscopic imaging device 10 of the imaging system 100 according to Fig. 1. Specifically, the representation provides a schematic front view of the stereoscopic imaging device 10 of the imaging system 100 according to the exemplary embodiment. Each of the two objectives 11 is directed to a common focus point 11b. In other words, the optical axes 11a of the objectives 11 intersect each other in their respective focus points represented by the common focus point 11b. A plane comprising the focus point 11b is a focal plane 11c. Further, the imaging device 10 comprises an objective plane 11d as averaged objective plane of the two objectives 11. The objective plane 11d corresponds to a plane through the optical centers of the optical element or elements (not shown) of the objectives 11 with the optical axes 11a extending from such plane in direction of the focus point 11b.

Fig. 3 shows a schematic representation of a left image 1L and a right image 1R the present invention is applied to according to a first exemplary embodiment. With respect to the imaging system 100 as per Fig. 1 and the stereoscopic imaging device 10 as per Figs. 1 and 2, the left image corresponds to an image imaged via one of the objectives 11 to be presented to a display portion of the display device 50 assigned to a left eye of the operator 60, and the right image corresponds to an image imaged via the other one of the objectives 11 to be presented to a display portion of the display device 50 assigned to a right eye of the operator 60.

Each of the left image 1L and the right image 1R show an object 2 to be observed. The object 2 comprises a feature 3. As apparent from a comparison of the left image 1L and the right image 1R, the object 2 is positioned in the left image more to the left and in the right image more to the right. To identify the respective offset Δy as the shown offset in the y-direction, the processing unit 40 selects the feature 3 in the left image 1L and transforms the feature 3 into a pixel pattern to be searched for in the right image 1R. Since each of the pixels is associated with respective imaging coordinates, a center position of the feature 3, here represented by the dashed line as a position in the y-direction, is detected by the processing unit. The same applies for identification of the center position of the feature 3 in the right image in the y-direction according to respective imaging coordinates. Accordingly, by comparing the center positions in the y-direction in the left image 1L and the right image 1R, the offset Δy in the y-direction is determined as shown in the right image 1R.

The processing unit 40 transmits the determined offset Δy to the control unit 30 to adapt the focus point 11b in accordance with the offset Δy. In alternative embodiments, the processing unit may at least transmit an information signal to the display device to display a representation of the offset Δy in a quantitative or qualitative manner to allow the operator to become aware of the offset Δy and to initiate adaption of the focus point 11b, if desired.

Fig. 4 is a schematic representation of the left image 1L and the right image 1R the present invention is applied to according to a second exemplary embodiment. In the second embodiment, the processing unit 40 does not select a specific feature 3 but processes the whole images 1L, 1R. However, in alternative embodiments, the processing unit 40 may apply the principles as described with respect to the whole images 1L, 1R only to a portion of the images 1L, 1R, the object 2 or the feature 3.

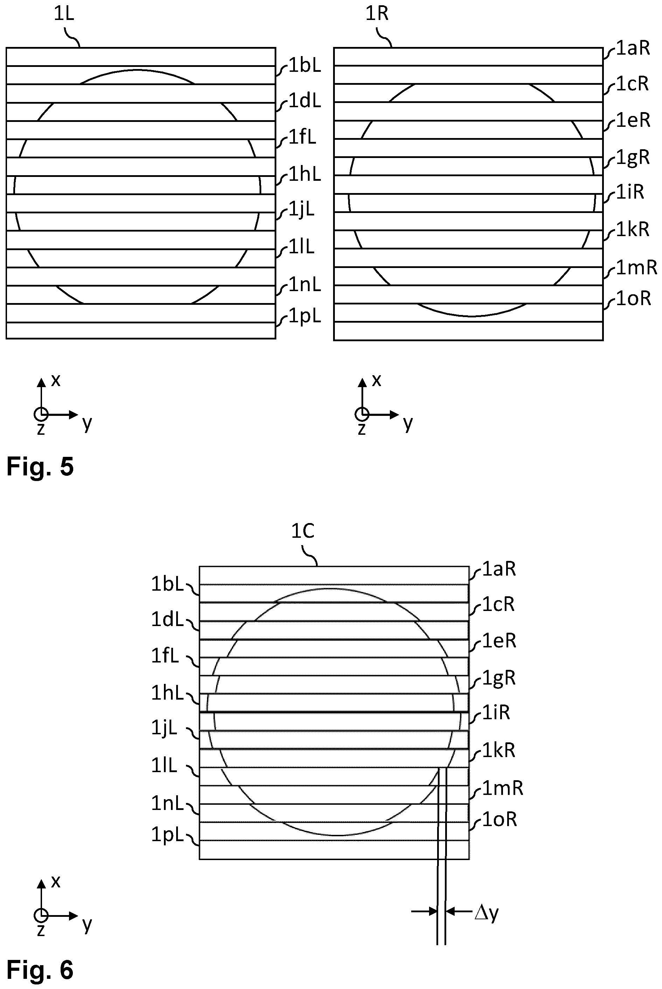

Fig. 5 shows a schematic representation of the left image 1L and the right image 1R according to Fig. 4 being processed according to the second embodiment. As shown, the processing unit 40 processes the left image 1L and the right image 1R to form line image segments 1bL, 1dL, ..., 1pL of the left image 1L and line image segments 1aR, 1cR, ..., 1oR. The line image segments 1bL, 1dL, ..., 1pL, 1aR, 1cR, ..., 1oR are formed such that a scan-out line on the display device 50 being associated with the y-direction starts with a first line image segment 1aR of the right image 1R, followed by a second line image segment 1bL of the left image 1L, and so on, as the left image 1L and the right image being superimposed.

Fig. 6 shows a schematic representation of a composite image 1C based on the processed left image 1L and right image 1R according to Fig. 5 according to the second embodiment. The composite image 1C is displayed on the display device 50 on each of the display portions. As apparent by the offset Δy indicated in Fig. 6, the line image segments 1bL, 1dL, ..., 1pL of the left image 1L displayed in the composite image 1C are offset from the line image segments 1aR, 1cR, ..., 1oR of the right image 1R displayed in the composite image 1 in the y-direction. To adapt the focus point 11b accordingly, the operator 60 may control the control device 30 to move the stereoscopic imaging device 10 accordingly. The focus point can be determined as optimal when the offset Δy disappears. Accordingly, controlling the adaption of the focus point 11b in the right direction can be tracked by the composite image 1C showing a reduction of the offset Δy.

The invention has been described with respect to an exemplary embodiments. However, the invention is not limited to the exemplary embodiments. For example, alternating scan-out lines for a composite image may only be used in positions of templates and/or features in a composite image and not for the overall image. Accordingly, less calculation resources may be required. Further, any adaption of the focus may be controlled by the operator in addition or alternatively to a control by the control device.

### LIST OF REFERENCE SIGNS

- 1aR, 1cR, ..., 1oR: image segment (right image)
- 1bL, 1dL, ..., 1pL: image segment (left image)
- 1C: composite image
- 1L: left image
- 1R: right image
- 2: object
- 3: object feature
- 10: stereoscopic imaging device
- 11: objective
- 11a: optical axis
- 11b: focus point
- 11c: focus plane
- 11d: objective plane
- 20: robotic device
- 21: robotic base
- 22: first robotic arm
- 23: second robotic arm
- 24: articulated joint
- 30: control device
- 40: processing unit
- 50: display device
- 60: operator
- 100: imaging system
- x: x-direction
- y: y-direction
- z: z-direction
- Δy: offset (y-direction)

## Claims

1. Imaging system (100), comprising:
a stereoscopic imaging device (10) configured to image a left image (1L) with respect to an image representation for a left eye, and a right image (1R) with respect to an image representation for a right eye,
wherein each of the left image (1L) and the right image (1R) corresponds to a respective optical axis (11a) of the stereoscopic imaging device (10), and
wherein the optical axes (11a) intersect with each other to define a focus point (11b) in a focus plane (11c),
a control device (30) configured to adapt the focus point (11b),
a display device (50) operatively connected to the stereoscopic imaging device (10) to display the left image (1L) and the right image (1R), and
a processing unit (40) operatively connected to the stereoscopic imaging device (10) and configured to transfer each of at least a portion of the left image (1L) and at least a portion of the right image (1R) into a pixel pattern, and to compare the pixel patterns with respect to positions representing the respective imaging coordinates.

2. Imaging system (100) according to claim 1, wherein the processing unit (40) is comprised by or operatively connected to the control device (30).

3. Imaging device (100) according to claim 1 or 2, wherein the processing unit (40) is operatively connected to a display device (50) and configured to transmit an information signal on the comparison of pixel patterns to be displayed by the display device (50).

4. Imaging system (100) according to any one of the preceding claims, wherein the pixel pattern represents a feature (3) or a template of an object (2) imaged by the stereoscopic imaging device (10).

5. Imaging system (100) according to any one of the preceding claims, wherein the processing unit (40) is configured to superimpose the pixel pattern of the left image (1L) and the right image (1R) with respect to the positions representing the respective imaging coordinates.

6. Imaging system (100) according to claim 5, wherein the processing device (40) is configured to detect an offset (Δy) of the pixel pattern of the left image (1L) with respect to the pixel pattern of the right image (1R) in at least one direction (x, y, z) by comparing the imaging coordinates of the superimposed pixel patterns.

7. Imaging system (100) according to claim 5 or 6, wherein the processing unit (40) is configured to generate a composite image (1C) comprising at least one image segment (1bL, 1dL, ..., 1pL) of the left image (1L) and image segment (1aR, 1cR, ..., 1oR) of the right image (1R).

8. Imaging system (100) according to claim 7, wherein the composite image (1C) is composed of alternating line image segments (1bL, 1dL, ..., 1pL) of the left image (1L) and line image segment (1aR, 1cR, ..., 1oR) of the right image (1R).

9. Imaging system (100) according to claim 7 or 8, wherein the processing unit (40) is operatively connected to a display device (50) and the display device is configured to display the composite image (1C).

10. Imaging system (100) according to claim 9, wherein the processing unit (40) is configured to assign different colour schemes to the left image (1L) and the right image (1R).

11. Imaging system (100) according to claim 9 or 10, wherein the processing unit (40) is configured to assign a predetermined transparency to at least one of the left image (1L) and the right image (1R).

12. Method for adapting a focus point of a stereoscopic imaging device (10) with respect to an object (2) to be imaged, comprising the steps of:
imaging an object (2) by the stereoscopic imaging device (10) to receive a left image (1L) with respect to an image representation for a left eye, and a right image (1R) with respect to an image representation for a right eye,
transferring each of at least a portion of the left image (1L) and at least a portion of the right image (1R) into a pixel pattern,
comparing the pixel patterns with respect to positions representing the respective imaging coordinates,
detecting an offset (Δy) of the pixel pattern of the left image (1L) with respect to the pixel pattern of the right image (1R) in at least one direction (x, y, z), and
adapting the focus point of the stereoscopic device in accordance with the offset (Δy).

13. Method according to claim 12, wherein the step of comparing the pixel patterns comprising at least one of:
searching for the pixel pattern as a feature or template of one of the images (1L, 1R) in the other image (1L, 1R) for comparing the imaging coordinates,
calculating a disparity,
generating a depth reconstruction for at least one pixel of the pixel patterns, and
generating a composite image (1C) comprising at least one image segment (1bL, 1dL, ... , 1pL) of the left image (1L) and image segment (1aR, 1cR, ..., 1oR) of the right image (1R).

14. Computer program product comprising instructions which, when the program is executed by a computer, cause the computer to carry out the method according to claim 12 or 13.

15. Computer-readable storage medium comprising instructions which, when executed by a computer, cause the computer to carry out the method according to claim 12 or 13.
